(19) Europäisches Patentamt / European Patent Office / Office européen des brevets

(11) **EP 4 112 171 A1**

(12) **EUROPEAN PATENT APPLICATION**

(43) Date of publication:
**04.01.2023 Bulletin 2023/01**

(21) Application number: **21182612.8**

(22) Date of filing: **29.06.2021**

(51) International Patent Classification (IPC):
**B01L 3/00** (2006.01)　　　**G02B 21/32** (2006.01)
**G06V 20/69** (2022.01)

(52) Cooperative Patent Classification (CPC):
**B01L 3/502761; G02B 21/32;** B01L 2200/0663;
B01L 2200/0668; B01L 2200/143; B01L 2300/0816;
B01L 2300/1861; B01L 2300/1872;
B01L 2400/0442; B01L 2400/0445; B01L 2400/0451

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.**
**80539 München (DE)**

(72) Inventors:
• **ERBEN, Elena**
　**01159 Dresden (DE)**
• **MAGHELLI, Nicola**
　**01309 Dresden (DE)**
• **KREYSING, Moritz**
　**01309 Dresden (DE)**

(74) Representative: **Schiffer, Axel Martin**
　**Rundfunkplatz 2**
　**80335 München (DE)**

Remarks:
Claims 16 to 40 are deemed to be abandoned due to non-payment of the claims fees (Rule 45(3) EPC).

(54) **METHOD AND APPARATUS FOR SPATIALLY MANIPULATING AT LEAST ONE PARTICLE IN A FLUID, COMPUTER PROGRAM PRODUCT AND COMPUTER-READABLE STORAGE MEDIUM**

(57)　The invention concerns a method for spatially manipulating at least one particle in a fluid, wherein the particle or the particles is/are spatially manipulated in the fluid by hydrodynamic flows which are generated in the fluid by means of dynamic localized heating of the fluid. The method according to the invention is characterized in that at least one target spatial configuration of the particle(s) in the fluid is defined and that the following further steps are carried out: a) an actual spatial configuration of the particle(s) is captured, b) a specific dynamic localized heating event to be applied to the fluid is determined in dependence of at least one recent actual spatial configuration of the particle(s) and a target configuration of the particle(s), c) the specific dynamic localized heating as determined in step c) is applied at least once to the fluid and d) at least one or all of the steps a) to c) are repeated. The invention concerns furthermore an apparatus for spatially manipulating at least one particle in a fluid by means of hydrodynamic flows a computer program product and a a computer-readable storage medium.

Fig. 2

EP 4 112 171 A1

**Description**

The present invention is concerned in a first aspect with a method for spatially manipulating at least one particle in a fluid according to the preamble of claim 1. In a second aspect the invention is concerned with an apparatus for spatially manipulating at least one particle in a fluid according to the preamble of claim 31. In further aspects the invention is concerned with a computer program product and a computer-readable storage medium.

The manipulation of micron-size particles, particularly their high-precision positioning, remains an active research topic with applications in the life sciences, engineering, and manufacturing. Examples of successfully used technologies include optical, magnetic, electrokinetic, acoustic and thermophoretic trapping, and the positioning of self-propelled Janus particles. However, some of these techniques are limited by requirements for specific material properties of the particles or the environment that they can be applied in. To overcome this constraint, hydrodynamic trapping has been successfully deployed, and is particularly attractive for the life sciences and for a lab-on-a-chip environment.

Hydrodynamic trapping methods can be subdivided into contact-based methods [1,2], where dissolved particles are immobilized against walls, wells, posts or other obstacles by fluid flow, and non-contact methods, where particles can be confined in stagnation-point flows [3,4], microvortices [5] or microeddies [6]. Active feedback control of flows in multi-inlet chambers has been demonstrated to control the position of stagnation-point flows and allows users to manipulate the particle position and counteract particle displacements due to diffusion [3,4]. With this method, it is feasible to control the position of single colloidal particles with a precision of 78 nm [4]. Although hydrodynamic trapping methods pose reduced constraints on material properties of the trapped particle [7], high-precision manipulation of particles requires the use of extremely precise and stable microfluidic pumps. Furthermore, hydrodynamic trapping by definition requires special chambers and cannot be used to generate flows in closed systems such as a cell. Additionally, the generated flows are global, typically ranging between pumps and outlets, which strongly limits the spatial resolution of the technique.

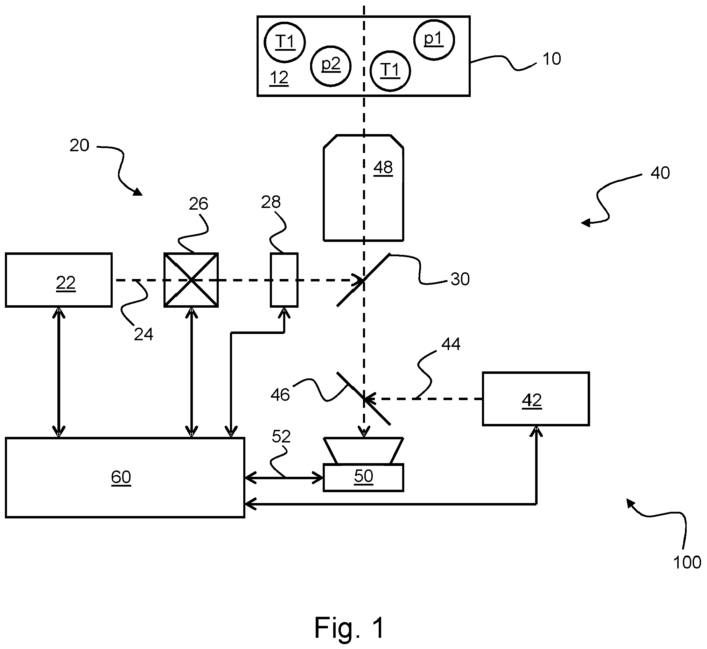

Another way to position particles with high precision could be to make use of thermoviscous flows. These have been described as the directed motion of aqueous media in response to travelling temperature fields [8], an emergent physical phenomenon driven by the thermal expansion of fluids in non-homogenous viscosity fields (compare Fig. 1b). In particular, thermoviscous flows have been used to transport aqueous solutions visualized by tracer particles or molecules along an optically defined path [8,9]. More recently, it has been shown that these flows can also be induced in cells and developing embryos [10-12], where they give rise to a streaming of the cytoplasm, albeit with limited abilities to control the positioning of cytoplasmically immersed colloids.

In a generic method for spatially manipulating at least one particle in a fluid, which is known, e.g., from WO 2008/077630 A1, the particle is spatially manipulated in the fluid by hydrodynamic flows which are generated in the fluid by means of dynamic localized heating of the fluid.

A generic apparatus for spatially manipulating at least one particle in a fluid by means of hydrodynamic flows, which is also known, e.g., from WO 2008/077630A1, has a receptacle for receiving the fluid and the particle(s) to be manipulated and a heating device for generating hydrodynamic flows within the fluid by dynamic localized heating of the fluid. The dynamic localized heating is designed to bring about a spatial manipulation of the particles within the receptacle by hydrodynamic flows. The generic apparatus furthermore has an imaging device for imaging at least parts of the receptacle and a control unit for controlling the heating device and the imaging device and for evaluating image data from the imaging device.

It can be considered an objective of the invention to provide a method and an apparatus of the kind described above which have a wide range of applications.

This objective is achieved by the method having the features of claim 1, by the apparatus having the features of claim 31 as well as by the computer program product and the computer-readable storage medium having the features of claims 39 and 40, respectively.

According to the invention the method for spatially manipulating at least one particle in a fluid as described above comprises the definition of at least one target spatial configuration of the particle(s) in the fluid and the following further steps:

    a) an actual spatial configuration of the particle(s) is captured,

    b) a specific dynamic localized heating event to be applied to the fluid is determined in dependence of at least one recent actual spatial configuration of the particle(s) and a target configuration of the particle(s),

    c) the specific dynamic localized heating as determined in step b) is applied at least once to the fluid and

    d) at least one or all of the steps a) to c) are repeated.

According to the invention, the generic apparatus as described above is further characterized in that the control unit is designed for:

    A) activating the imaging device to capture an actual spatial configuration of the particle(s) within the receptacle,

B) determining control signals for the heating device suitable for a specific dynamic localized heating event to be applied to the fluid in dependence of at least one recent spatial configuration of the particle(s) and a previously defined target configuration of the particle(s),

C) activating the heating device to apply the specific dynamic localized heating event as determined in step B) at least once to the fluid and

D) repeating at least one or all of the steps A) to C).

According to the invention, a computer program product or a computer-readable storage medium comprises instructions which, when the program is executed by the control unit, causes the control unit to carry out a method with the steps of

A) activating the imaging device to capture an actual spatial configuration of the particles within the receptacle,

B) determining control signals for the heating device suitable for a specific dynamic localized heating event to be applied to the fluid in dependence of at least one recent spatial configuration of the particles and a previously defined target configuration of the particles,

C) activating the heating device to apply the specific dynamic localized heating event as determined in step B) at least once to the fluid and

D) repeating at least one or all of the steps A) to C).

Advantageous variants of the method according to the invention and preferred embodiments of the apparatus according to the invention will be described in the following, in particular with respect to the dependent claims and the attached figures.

The instructions of the computer program product and/or of the computer-readable storage medium can in particular serve the purpose of activating the control unit to carry out the method according to one of the claims 1 to 30.

The basic idea of the invention is to use specific dynamic localized heating events to spatially manipulate particles in a fluid and to determine these specific dynamic localized heating events, in each case, in dependence of a target configuration of the particles and a recently captured actual configuration of the particles in the fluid. The specific dynamic localized heating events serve the purpose of generating sequences of hydrodynamic flows within the fluid. The spatial manipulation of the particles can be carried out in a closed-loop control wherein the actual captured particle configurations serve as feedback for the determination of a specific dynamic localized heating event to be applied next.

An essential advantage of the invention is that a highly precise manipulation, in particular a positioning, of a particle or a plurality of particles can be achieved, and that the manipulation can, in principle, be automated.

The apparatus according to the invention can be designed for carrying out the method according to the invention.

The term spatial manipulation of a particle in the fluid generally means that the particlefluid-system in a receptacle is influenced such that the particle is moved from one point to another and/or from one orientation to another as compared, e.g., to a reference frame in which the receptacle is stationary.

In preferred embodiments of the method according to the invention, the spatial manipulation of the particle(s) can comprise at least one of:

- moving specified particle(s) towards specified target locations in the fluid,

- moving specified particle(s) along specified paths in the fluid,

- keeping specified particle(s) in specified target locations in the fluid,

- keeping specified particle(s) in specified target orientations in the fluid,

- moving specified particle(s) towards specified target orientation(s) in the fluid.

Generally, the method and the apparatus according to the invention can be used to manipulate any suspended particle in a fluid which can at least partly move freely in the fluid. In preferred variants of the method according to the invention, the particle(s) to be manipulated is/are at least one of the following: a biological particle, a cell, a virus, a tissue fragment, a metal particle, a composite material particle, a polymer particle, a microparticle, a nanoparticle.

Generally, the method and the apparatus according to the invention can be used for any kind of fluid in which hydrodynamic flows can be generated by dynamic localized heating of the fluid. In preferred embodiments of the method according to the invention, the fluid is a liquid and, in particular, contains water or is water.

According to the invention, hydrodynamic flows are generated in the fluid by means of dynamic localized heating of the fluid and the manipulation of a particle is achieved by the particle being carried by the generated hydrodynamic flow.

It would in, principle, also be possible to generate hydrodynamic flows with specific dynamic localized heating events having a negative sign, i.e., events where hydrodynamic flows are introduced into the fluid by means of dynamic localized cooling of the fluid and the manipulation of a particle is again achieved by the particle being carried by the generated hydrodynamic flows.

In contrast to the phenomenon of thermophoretic motion which is strongly dependent on the specific types of particles and the specific liquid surrounding these particles, the general principle of the mechanism underlying the present invention is independent of the specific nature of the particles. In a thermophoretic motion, different particles will generally move differently, e.g., at different speeds and even in different directions. In hydrodynamic flows, as being used in the present invention, the particles will move essentially according to the physics of hydrodynamics. The mechanism of the present invention is governed essentially only by the optical, and thermodynamic properties of the used fluid, e.g., water. The hydrodynamic flows generated by dynamic localized heating of the fluid are also termed thermoviscous flows.

In principle, the dynamic localized heating of the fluid can be brought about by any energy deposition into the fluid which leads to the intended thermoviscous flows. E.g., the dynamic localized heating can be introduced by specific heating devices attached to the receptacle via heat conducting connections and which are selectively heated. In preferred embodiments of the method according to the invention, the dynamic localized heating of the fluid is brought about by a laser or an infrared laser.

In another preferred embodiments of the method according to the invention, the dynamic localized heating of the fluid his brought by light emitting diodes, e.g., infrared light emitting diodes.

Correspondingly, in a preferred embodiment of the apparatus according to the invention, the heating device has a laser for providing the energy for the dynamic localized heating and optical means such as a scanner, galvo-scanner, quasistatic scanner, a spatial light modulator, acousto-optical scanner, or any other suitable device for relaying heating laser radiation to variable, controlled locations in the fluid, and enabling the dynamic scanning of the heating laser beam across the sample.

An optical assembly as described in WO 2008/077630A1 can be used for the dynamic localized heating of the fluid. In this regard, the respective contents of WO 2008/077630A1 is included in the present disclosure.

In preferred embodiments of the method according to the invention, the dynamic localized heating events of the fluid are brought about by repetitive scanning of a focal volume of the laser along an especially selected path or a trajectory in the sample.

More specifically, the determination of the specific dynamic localized heating events to be determined to the fluid in step b) of claim 1 can comprise the determination of at least one of:

- 2-dimensional scan path in the fluid,

- 3-dimensional scan path in the fluid,

- laser intensity,

- laser wavelength (where it can be changed),

- laser scanning speed,

- scanning frequency of the laser,

- number of times the scanning path is scanned.

A a specific dynamic localized heating event can comprise only one scan of a laser scan path or many, e.g., 100, scans of the same laser scan path.

Application of the specific dynamic localized heating as determined means that the determined dynamic heating pattern is applied to the fluid. This can be done only once or a plurality of times one after another. The heating device of the apparatus according to the invention will then correspondingly be activated by the control unit.

Generally, a scan path can be anywhere in the receptacle, and can consist of one or more straight or arbitrary shaped segments of arbitrary length, which need not necessarily be continuous. A scan path can be parallel to a connecting vector between a target destination and an actual position of the particle. The scan path can either be centered on the particle, ending slightly before it, or starting slightly after it. The laser scan can be applied along the path, with a typical scan rate of, e.g., 1-3 kHz, which is sufficiently slow to allow for the relaxation of temperature fields between successive scan periods. The scan rate can vary along the scan path.

It is also possible to vary and/or adapt a number of repetitions or a repetition rate of a loop containing at least some or all of steps a) to c) of claim 1 to a specific manipulation task.

In further preferred embodiments of the method according to the invention, the paths along which the laser is scanned can be chosen such that the heating radiation does not hit the particle(s) to be manipulated. I.e., the particle(s) is or are spatially manipulated essentially without being contacted by heating laser radiation. The danger of the particles as such, or the receptacle e.g., living cells or embryos, to be influenced or harmed by the heating radiation is thereby in minimized.

In further preferred embodiments of the method according to the invention, a scan rate of the repetitive scanning is chosen such that temperature fields in the sample can relax between successive scans. A general heating of the sample can thus be avoided.

The specific dynamic localized heating events to be applied to the fluid can further be individualized by being determined also in dependence of a mobility of particle(s) in the fluid. The accuracy of the manipulation, in particular the positioning, can thus be further improved. The mobility of particles to be manipulated can be derived from the observed data.

For the receptacle which receives the fluid and the particles to be manipulated components known in the art can be used. It is important that the receptacle allows the specific dynamic localized heating to be introduced into the fluid. E.g., the receptacle described in WO 2008/077630A1 can be used for carrying out the invention. In this regard, the respective contents of WO 2008/077630A1 is included in the present disclosure.

In a preferred embodiment of the according to the invention, the receptacle has means for controlling the basic temperature of the fluid.

The control unit for controlling the heating device and the imaging device and for evaluating image data from the imaging device can typically be a PC or equivalent devices, with peripheral components as known in the art.

The imaging device serves the purpose of capturing actual configurations of the particles to be manipulated in the fluid. It can be any, in particular optical, device with which at least the portions of the receptacle can be captured or imaged which contain particles to be manipulated. In preferred embodiments of the invention, the imaging device is a microscope. The microscope can be a computer-controlled microscope and does not need to allow a visual observation of the sample. Preferably, the acquisition of images is at least partly automated and image algorithms are being used for the evaluation of the captured configurations of the particles.

For example, the microscope can be designed for carrying out at least one of the following techniques: Fluorescence Microscopy, Multi-Photon-Fluorescence Microscopy, Widefield Microscopy, Scanning Microscopy, Darkfield Microscopy, Confocal Microscopy, Lightsheet Microscopy, Localisation Microscopy, Structured Illumination Microscopy, Photoactivated Localization Microscopy (FPALM), Stochastic Optical Reconstruction Microscopy (STORM), Stimulated Emission Depletion Microscopy (STED), Ground State Depletion Microscopy (GSD), Saturated Pattern Excitation Microscopy, Saturated Structured Illumination Microscopy (SSIM), Light Field Microscopy (LFM), Fourier Light Field Microscopy (FLFM), Oblique plan microscopy (OPM).

The microscope can relay imaging radiation onto and into the sample and can relay back radiation emitted from the sample in response to the imaging radiation, e.g., fluorescence radiation, via the same microscope objective that is also used for introducing the heating radiation into the sample.

The capturing of the actual spatial configuration of the particle(s) can comprise at least one of the following:

- a 1-dimensional position of the particle(s),

- a 2-dimensional position of the particle(s),

- a 3-dimensional position of the particle(s),

- a measurement of an orientation of the particle(s) within a plane,

- a measurement of a 3-dimensional orientation of the particle(s) in space.

Definition of a target spatial configuration means that a certain configuration into which the particle or the particles to be manipulated is defined. This can, e.g., be done by a user at the computer screen on the basis of a measured actual configuration or an actual image of the particles. The definition of a target configuration can be assisted by image evaluation software which, e.g., recognizes certain structures in the measured image data. The target spatial configuration of the particle(s) in the fluid can comprise at least one of:

- specified target location(s) of the particle(s) in the fluid,

- specified target velocity or velocities of the particle(s) in the fluid,

- specified target orientation(s) of the particle(s) in the fluid,

- specified target rotation speed(s) of the particle(s) in the fluid.

The target spatial configuration of the particle(s) in the fluid can furthermore be a 1-dimensional localisation of the particle(s), a 2-dimensional localisation of the particle(s) or a 3-dimensional localisation of the particle(s).

The target configuration can additionally or alternatively also include at least one of the following requirements:

- (a) specified particle(s) be not in a specified location,

- (a) specified particle(s) be as far away from (a) specified location(s) as possible,

- (a) specified particle(s) be at least in (a) specified distance(s) from (a) specified location(s),

- specified particles be as close together as possible,

- specified particles must not touch each other,

- particles of a different kind being treated differently.

A key feature of the present invention concerns, in step b), the determination of a specific dynamic localized heating event to be applied to the fluid in dependence of at least one recent actual spatial configuration of the particle(s) and a target configuration of the particle(s). In this regard, a cost function can be calculated on the basis of a recent, in particular the most recent, actual spatial configuration of the particles and a target configuration of the particles. The specific dynamic localized heating events can then be determined in dependence of the cost function. The cost function can be a scalar function of at least one recent actual spatial configuration of the particle(s) and a target configuration of the particle(s) and/or a description of the desired target configuration. A description of the target configuration can be that, e.g., all particles of a first kind should be moved to the left, and all particles of a second kind should be moved to the right side to enable an effective sorting.

For example, after an application or each application of the specific dynamic localized heating event in step c), the actual configuration can be captured and the cost function can then be calculated for the new configuration and, if the cost function has decreased from the most recent value, step c) can be repeated with the same specific dynamic localized heating event, or, if the cost function has increased from the most recent value, step b) can carried out anew.

The general idea of the invention is realized where only one particle is spatially manipulated. In particularly preferred embodiments of the method according to the invention, though, at least two particles are simultaneously spatially manipulated. This means that the actual configuration of a plurality particles is captured. The specific dynamic localized heating events can then be determined such that both (or more) particles are moved or manipulated but also such that essentially only one particle is manipulated or moved at a time.

E.g., in a configuration with at least two particles to be manipulated, the particle being mainly manipulated, in each case, in the next step can be the particle which is farthest away from at least one of a target position and a target orientation associated with the respective particle.

In principle, each particle to be manipulated can be considered individually. E.g., each particle can individually be moved to a certain location or to a certain orientation. For certain applications, though, it is useful to consider certain types of particles. I.e., a plurality of particles to be spatially manipulated can comprise at least one subset of equivalent are identical particles. The cost function can then be invariant with regard to exchange of equivalent or identical particles. The complexity of the underlying mathematical task can thus be reduced.

More specifically, the cost function can contain at least one of the following arguments:

- distance of a specific particle to a specific target location of this particle,

- reciprocal distance of a specific particle to a specified location,

- distance of a specified type of particles to a specific target location of the respective type of particles,

- reciprocal distance of a specified type of particles to a specified location specific for the respective type of particles,

- angle between an actual particle orientation and a target orientation of the respective particle or the respective type of particle,

- difference between an actual particle velocity and a target velocity of the respective particle or the respective type of particle.

In further preferred embodiments of the method according to the invention, at least some of the following data can be stored in a database:

- previous actual spatial configurations of the particle(s),

- previous dynamic localized heating events applied to the fluid determined on the basis of at least a respective actual spatial configuration and a target configuration and

- changes in the actual spatial configurations of the particle(s) caused by the respective dynamic localized heating event applied to the fluid,

Future dynamic localized heating events to be applied to the fluid can be calculated using at least parts of the data stored in the database, in particular making use of machine learning/ artificial intelligence.

In further preferred embodiments of the method according to the invention, between steps a) and b) the following further step can be carried out: the particle(s) to be manipulated is or are associated with at least one of a target position and a target orientation. Association of a particle with a specific target position means that the target position is attributed to the respective particle.

In further preferred embodiments of the method according to the invention, a tracking of the particle(s) can be carried out by identifying particles present in a captured new actual configuration with particles in the most recent actual configuration. Thus, trajectories of individual particles can be derived from a sequence of actual configurations.

In further preferred embodiments of the method according to the invention, after the tracking of the particles, a target configuration can be reassessed and, if the target configuration is changed to a new target configuration, the particles can then be associated, in each case, with at least one of a new target position and a new target orientation. Thus, the system can dynamically react to a change of the target configuration and can change the attribution of the particles to specific target configurations on the fly.

In further preferred embodiments of the method according to the invention, the integrity of at least one particle can be changed prior or during or after the spatial manipulation. E.g., a fragment from a biological particle can be cut off by laser cutting. The apparatus according to the invention can correspondingly have at least one device, e.g., one laser, for changing the integrity the particle(s). The apparatus according to the invention can also have devices for changing and orientation of at least one particle, e.g., an optical tweezer.

Comparing the actual positions of particles to their expected positions might be useable to infer forces acting on the particles. Given that flow-induced forces are typically weak, such force sensing might be particularly sensitive. For some applications it might be beneficial to be able to control particle interactively via hand gestures, for which mixed reality devices offer an attractive and likely compatible solution. Force feedback interfaces could enable tactile interactive manipulations.

In a preferred embodiment of the method according to the invention, a deviation of an actual position of at least one particle to be manipulated is compared with an expected position for this particle and a force acting on the particle is determined in dependence of this deviation.

In this regard, it can be useful to have at least two hydrodynamic flows directed in opposite directions to a center and to capture the particle in the center, at the point where the two opposite flows meet. By such flows in opposite directions an effective potential is generated for the captured particle.

For a calibration of the measured forces, it can be useful to impose external forces, e.g., electrostatic, or magnetic forces, of a known magnitude on the fluid containing the particles. The deviation of the position of the particle from an equilibrium position in the effective potential can then be measured in dependence of the magnitude of the external force and, thus, the magnitude of the force acting on the particle through the hydrodynamic flows can be determined.

A calibration of the measured forces can alternatively or additionally also be achieved by observing thermal movements, in particular a mean distance from an equilibrium position of the particle in the effective potential. With the assumption that the mean amount of energy in each degree of freedom is $k_BT$ ($k_B$=Boltzmann constant, T= temperature) the force acting on the particle can be determined.

Further features and advantages of the invention will be described in the following with respect to the attached figures. Therein shows:

Figure 1:   a schematic diagram of an apparatus according to the invention;

Figure 2:   schematic diagrams to illustrate the general principles of the method according to the invention;

Figure 3:   a flowchart illustrating an example of a method according to the invention;

Figure 4:   diagrams illustrating a simple example of manipulating two particles;

Figure 5:   diagrams illustrating a further example of manipulating six particles;

Figure 6:   diagrams illustrating two different possibilities of achieving a target configuration of three particles;

Figure 7:   diagrams illustrating a further example of achieving a target configuration of three particles;

Figure 8:   diagram illustrating the motivation for an exemplary cost function and

Figure 9:   a diagram illustrating an example of three particles, corresponding target locations and visualized hydrodynamic flows in a fluid.

An embodiment of an apparatus 100 according to the invention will be described in the following with reference to figure 1. Equal and equivalent components generally have the same numerals in the figures. The apparatus 100 shown in figure 1 is designed for carrying out the method according to the invention.

As essential components, the apparatus 100 as shown in figure 1 has a receptacle 10 for receiving the fluid 12 and the particles p1, p2 to be manipulated, a heating device 20 for generating hydrodynamic flows within the fluid 12 by dynamic localized heating of the fluid 12, an imaging device 40 for imaging at least parts of the receptacle 10, and a control unit 60 for controlling the heating device 20 and the imaging device 40 and for evaluating image data 52 from the imaging device 40. According to the invention, the dynamic localized heating is designed to bring about a spatial manipulation of the particles p1, p2 within the receptacle 10 by hydrodynamic flows. The fluid 12 and the particles p1, p2 contained therein, are also termed the sample.

More specifically, in the example shown in figure 1, the heating device 20 has a laser 22, e.g., an infrared laser, for providing heating radiation 24. The heating radiation 24 is guided via an optical path into the sample, i.e., into the receptacle 10 containing the fluid 12 and the particles p1, p2, to be manipulated. In the example shown in figure 1, the optical path contains a scanner 26, a beam shutter 28, a beam splitter 30, and a microscope objective 48. By means of the scanner 26 the heating radiation 24 can be guided to variable locations within the receptacle 10. The beam shutter 28 serves the purpose of preventing heating radiation 24 from reaching the receptacle 10. The beam splitter 30 can, e.g., be a dichroic mirror which directs the heating radiation in the direction of microscope objective 48. In the example shown in figure 1, the scanner 26 and the beam shutter 28 can send status information back to the control unit and can be controlled by the control unit 60.

It is clear that figure 1 is a schematic diagram and that in reality the optical beam path can have a plurality of further components which are not shown in figure 1. More specifically, the optical setup can be as described in WO 2008/077630 A1. The optical assembly of figure 1 is the optical setup of an inverted microscope. Other geometries are, of course possible. It is clear, that, for this inverted setup of an inverted microscope and heating via a laser, the receptacle 10 must have a window allowing for the heating radiation and the imaging radiation 44 to enter the sample. More generally, an apparatus or receptacle with localized heaters and/or an upright microscope is also possible, which would not require such a window. The receptacle 10 in figure 1 can, e.g., be a Petri dish. The receptacle 10 can have means for controlling the temperature of the fluid 12 which are also not shown in figure 1. Such means for controlling the temperature of the fluid or also described in WO 2008/077630 A1 to which reference is made in this regard.

The imaging means 40 in the example of figure 1 is realized by a microscope, e.g., a widefield fluorescence microscope. Many other imaging and microscope techniques are possible as described above. The microscope which is also shown only schematically comprises light source 42, a beam splitter 46 and the microscope objective 48. Imaging radiation 44 provided by the light source 42, e.g., a laser, is guided by the beam splitter 46, e.g., a dichroic beam splitter, in the direction of the microscope objective 48. The imaging radiation passes through beam splitter 30, enters the microscope objective 48 and is focused by the microscope objective into the sample, i.e., into the fluid 12 containing the particles p1, p2 to be manipulated.

Fluorescence radiation radiated back from the sample, e.g., from dyes with which, e.g., the particles to be manipulated are prepared, or autofluorescence light travels back through the microscope objective 48, beam splitter 30, and beam splitter 46 and reaches an optical detector 50 and is detected there. The optical detector 50 can be a camera which can record images of a field of view as propagated by the optical beam path, i.e., the camera can capture an actual spatial configuration of the particles p1, p2 within the receptacle 10. Both, the light source 42 and the optical detector 50 are controlled by the control unit 60 and can, in each case, sent back status data to control unit 60.

Target positions T1, T2 are shown schematically in the receptacle 10 of figure 1. The target positions T1, T2, represent the locations to which the particle p1 and p2, respectively, are to be spatially manipulated, i.e., the spatial manipulation task, in this example, consists of moving particle p1 to location T1 and moving particle p2 to T2.

According to the invention, the control unit 60

is designed for:

A) activating the imaging device 40 to capture an actual spatial configuration of the particles p1, p2 within the receptacle 10,

B) determining control signals for the heating device 20 suitable for a specific dynamic localized heating event to be applied to the fluid 12 in dependence of at least one recent spatial configuration of the particles p1, p2 and a previously defined target configuration T1, T2 of the particles p1, p2,

C) activating the heating device 20 to apply the specific dynamic localized heating event as determined in step B) at least once to the fluid 12 and

D) repeating at least some of the steps A) to C).

Further devices for manipulating the sample, and specifically the particles p1, p2, to be spatially manipulated, e.g., further lasers can be present in the apparatus 100 of figure 1.

The control unit 60 can be a PC or a similar computing device with peripheral components as generally known in the art. The control unit 60 can have both of a computer program product and a a computer-readable storage medium according to the invention.

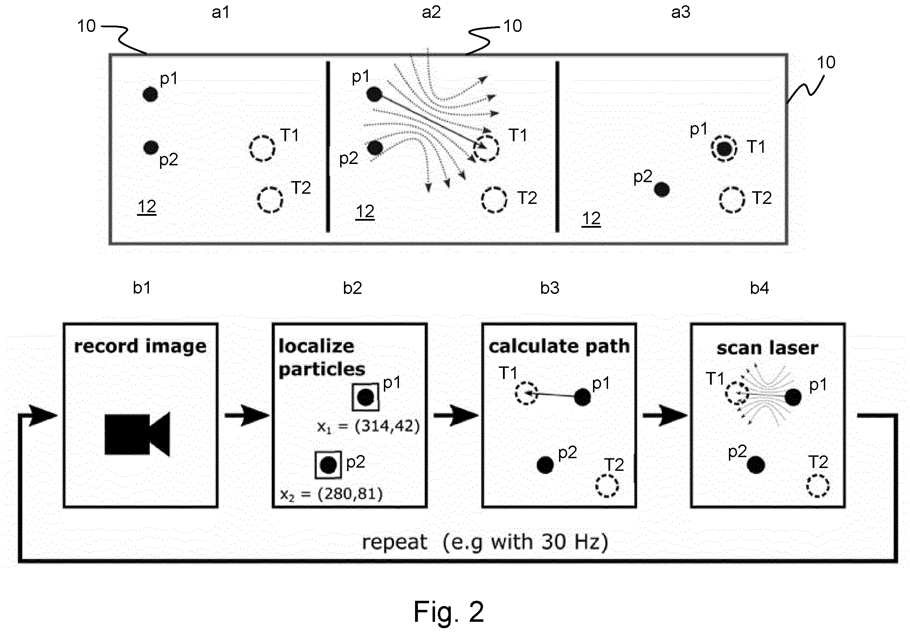

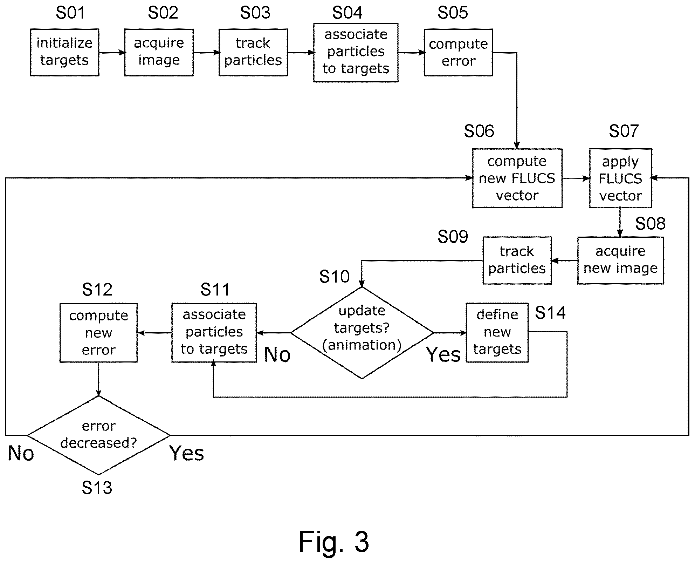

The essential features of the method for spatially manipulating particles p1, p2 in a fluid 12 will now be described, first more generally with regard to figure 2 and subsequently in more detail with reference to figure 3.

The upper portion of figure 2 shows three schematic drawings a1, a2, and a3, of a receptacle 10 containing, as in figure 1, particles p1, p2 to be spatially manipulated, i.e., to be moved from actual locations to target locations T1 and T2, respectively. Drawing a1 shows the initial configuration where the particles p1 and p2 are far away from the target locations T1 and T2 to which they are to be moved. Drawing a2 schematically shows, represented by dotted arrows, the hydrodynamic flows or thermoviscous flows to be generated in the fluid 12. Drawing a3 shows the situation after a specific dynamic localized heating event has been applied. As can be seen in drawing a3, particle p1 has successfully been moved to the corresponding target location T1 and the distance between particle p2 and its target location T2 is at least smaller as compared to the initial situation of drawing a1.

The lower portion of figure 2 depicts essential steps of the method for spatially manipulating particles p1, p2 in a fluid 12 according to the invention.

First (drawing b1), an actual spatial configuration of the particles p1, p2 is captured (step a)), e.g., an image is recorded with the camera 50 of the microscope 40 in figure 1.

Then, in the example shown in figure 2, the particles to be manipulated are localized, i.e., the coordinates of the respective particles p1, p2, are identified (drawing b2).

After definition of a target spatial configuration of the particles p1, p2, i.e., in the example of figure 2, after definition of target locations T1, T2, paths for both particles p1 and p2 to reach their respective target locations T1, T2, are calculated (drawing b3).

According to step b) of the method according to the invention, a specific dynamic localized heating event to be applied to the fluid 12 is then determined in dependence of at least one recent actual spatial configuration of the particles p1, p2, e.g., in dependence of at least the image recorded in step a) (drawing b1) and the target locations T1, T2 of the particles p1, p2.

According to step c) of the method according to the invention, the specific dynamic localized heating event as determined in step b) is applied at least once to the fluid 12. In the example shown in figure 2, the specific dynamic localized heating event is applied to the fluid 12 by appropriately scanning, e.g., with scanner 26 in figure 1, the heating radiation 24 through the sample (drawing b4).

Thus, with the method according to the invention, the particles p1, p2 are spatially manipulated in the fluid 12 by hydrodynamic flows which are generated in the fluid 12 by means of dynamic localized heating of the fluid 12.

According to step d) of the invention, at least one or all of the steps a) to c) is or are repeated. In the example shown in figure 2, the cycle of steps a) to c) is repeated e.g., with 30 Hz.

A more detailed example of a method according to the invention will be described with reference to figure 3. In step S01 "initialize targets", at least one target spatial configuration of the particle(s) to be manipulated in the fluid is defined. Then, in step S02, an image of the sample is acquired, which corresponds to step a) of capturing an actual spatial configuration of the particle(s) to be manipulated. This can be realized, e.g., by the acquisition of a microscopic image, see description of figure 1. In the example of figure 3, the particles are then tracked in step S03, i.e., particles present in the actual configuration captured in step S02 are identified with particles in the most recent actual configuration. In step S04, the particles to be manipulated are associated, in each case, with a target position. In step S05 "compute error", a cost function is calculated in dependence of a recent actual spatial configuration of the particles p1, p2, e.g., the image acquired in step S02, and a target configuration T1, T2 of the particles p1, p2, e.g., the target configuration or locations defined in step S01.

According to step b) of the method according to the invention, a specific dynamic localized heating event to be applied to the fluid 12 will then be determined in step S06 "compute new FLUCS vector", e.g., in dependence of the cost function calculated in step S05. Thus, the specific dynamic localized heating event will be dependent of at least one recent actual spatial configuration of the particles and a target configuration of the particles. It is also possible, though, that the specific dynamic localized heating event to be applied to the fluid 12 is determined irrespectively of the cost function value, e.g., by selecting the furthermost particle and pushing it towards its target.

In step S07 "apply FLUCS vector", the specific dynamic localized heating event determined in step S06 is applied to the sample, i.e., to the fluid containing the particles to be manipulated. This corresponds to step c) of the method according to the invention.

According to step d) of the method according to the invention, at least some of steps a) to c) are repeated. In the flowchart depicted in figure 3, a new image is acquired in step S08, i.e., step a) of the method according to the invention is repeated. This is followed by a further tracking of the particles in step S09, i.e., the particles present in the actual configuration captured in step S08 are identified with particles in present in the actual configuration captured in step S08, i.e., for each of the particles a path is obtained.

Step S10 is a query whether or not a target configuration is to be updated. In preferred embodiments the software decides whether or not the target configuration will be updated.

In the case where the target configuration is left unchanged, the query S10 is followed by step S11 where, as in step S04, the particles to be manipulated are associated, in each case, with a target position. In the case where in response to the query in step S10 the target configuration is to be updated, a new target configuration, e.g., new target locations are defined in step S14 "define new targets" and the program continues with step S11.

Step S11 is followed by step S12 in which, as in step S05, the cost function is calculated anew for the new actual configuration of the particles as captured in step S08 and, if applicable, for the new target configuration as defined in step S14.

In step S13 it is decided whether or not the error, i.e., the cost function, has decreased as compared to the value determined in step S05.

If the cost function has, in fact, decreased from the value determined in step S05, step c) being realized in the example of figure 3 by step S07 is repeated with the same specific dynamic localized heating event as determined in step S06.

If, on the other hand, the cost function has increased from the value determined in step S05, step b) of the method according to the invention is carried out anew. I.e., a new specific dynamic localized heating event to be applied to the fluid 12 will be determined in step S06 "compute new FLUCS vector" in dependence of the cost function calculated in step S12.

Thus, a closed-feedback-loop-control and an automated spatial manipulation of particles in a fluid are realized.

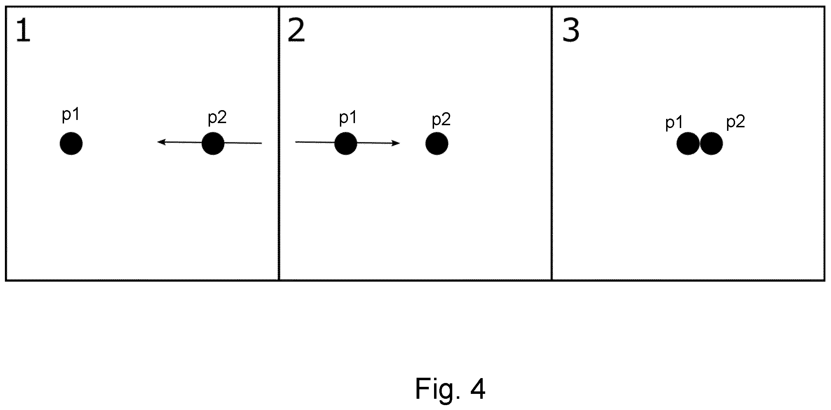

Figure 4 shows in schematic diagrams 1 to 3 how two particles p1 and p2 are brought close together using thermoviscous flows. Diagram 1 shows the initial situation. A first specific dynamic localized heating event is determined and applied which moves particle p2 closer to the center. Then, as depicted in diagram 2, a second specific dynamic localized heating event is determined and applied which brings particle p1 closer to the center and in a location adjacent to particle p2. Diagram 3 shows the final configuration of particles p1 and p2.

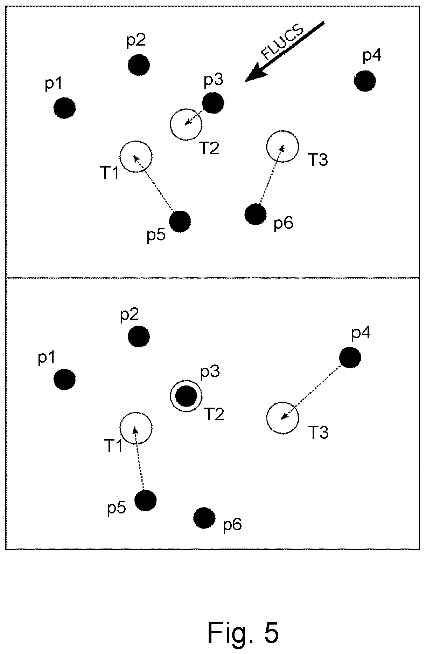

An example of an algorithm where the association of the particles to be manipulated to specific target locations is reassessed and, if need be, changed after a specific dynamic localized heating event is applied will be described in connection with figure 5.

The upper diagram in figure 5 shows the situation with identical particles p1 to p6 and target locations T1 to T3. As depicted in each case by dotted arrows, particle p5 is associated with target location T1, particle p3 is associated with target location T2 , and particle p6 is associated with target location T3. The principle for theses associations is that, in each case, for each target location, the particle closest to the respective location is chosen. In preferred embodiments, a so-called Munkres-algorithm can be used.

On the basis of these associations and the initial configuration of the particles p1 to p6 in the upper diagram in figure 5, a cost function and, subsequently a specific dynamic localized heating event is determined and applied. This heating event is schematically depicted in the upper diagram of figure 5 by the solid arrow "FLUCS".

The lower diagram in figure 5 shows the situation after the heating event has been applied. Although the application of the heating event brought particle p3 to location T2, as desired, the positions of particles p5 and p6 which were associated with target locations T1 and T3, respectively, have also changed and particle p6 is no longer the particle closest to location T3. A new assessment of the association to the target locations yields that particle p4 instead of particle p6 will be associated with target location T3. It is also noteworthy that particle p3, which would be the particle closest to target location T3 is no longer considered in this new assessment because particle p3 has already reached its destination T2. On the basis of this new association the cost function and correspondingly the specific dynamic localized heating event to be applied next will be determined.

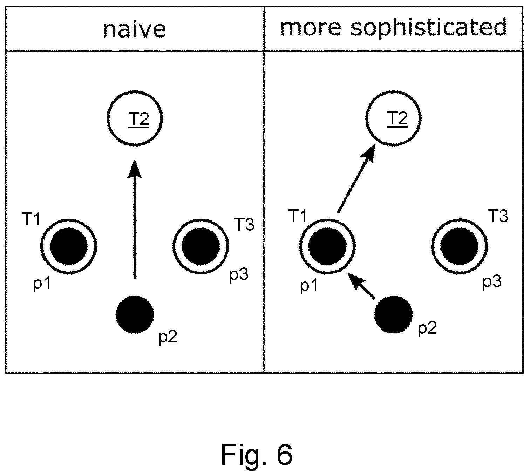

In some cases, it is advantageous, though, to include even particles which have reached their destination in a new assessment. Such a situation will be described with reference to figure 6. The left diagram in figure 6 shows a configuration with three identical particles p1, p2, p3. Particles p1 and p3 have reached their target locations T1 and T3, respectively, i.e., only particle p2 is left to be positioned in the associated target location T2. The right diagram in figure 6 illustrates an algorithm associating, in each case, the closest particle to a target location. This leads to a revised association where particle p1 is reassigned to target location T2 even though it has already reached its destination T1 and particle p2 is associated with target location T1. The cost function and the specific dynamic localized heating event will be determined accordingly. The approach of the right diagram of figure 6 avoids the necessity of guiding particle p2 between particles p1 and p3.

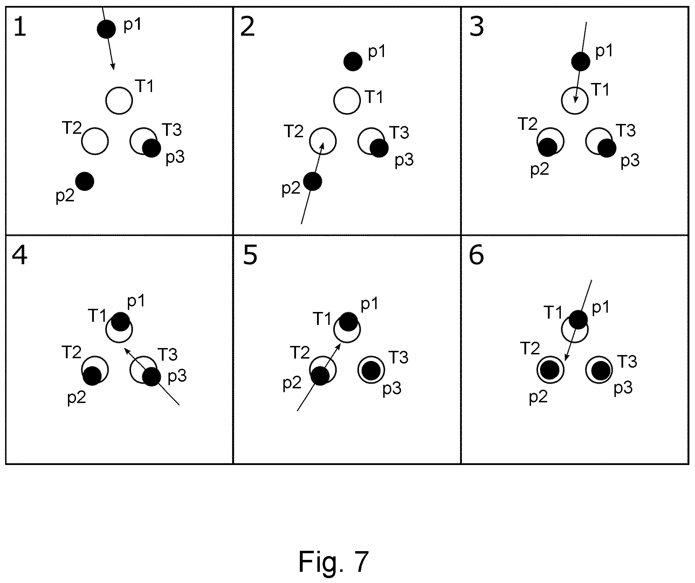

A further example of the method according to the invention where a plurality of identical particles are to be spatially manipulated to respective target locations will be described with reference to figure 7. In the example depicted in figure 7, three particles p1, p2, and p3 are to be moved to associated target locations T1, T2, and T3, respectively. In each case, the specific dynamic localized heating event to be applied next focuses on the particle being farthest away from the respective associated target location. Diagram 1 of figure 7 shows an initial situation where particle p1 is farthest away from its associated target location T1. Determination and application of a specific dynamic localized heating event leads to the situation shown in diagram 2 where particle p1 has considerably approached its target location T1. The target farthest away from its target location is now particle p2. Determination and application of a corresponding specific dynamic localized heating event then leads to the situation in diagram 3 where, again, particle p1 is farthest away from its target location T2. The further proceeding according to the principle that in a configuration with a plurality particles to be manipulated, the particle being manipulated, in each case, in the next step is the particle being farthest away from the target position associated with the respective particle is depicted in diagrams 4 to 6. In diagram 4 particle p3 is farthest away from its target location T3 and, accordingly, particle p3 is moved. In diagram 5, particle p2 is farthest away from its target location T2 and is accordingly manipulated. In the situation depicted in diagram 6, particles p2 and p3 have reached their target locations T2 and T3, and only particle p1 is left to be moved to its target location T1.

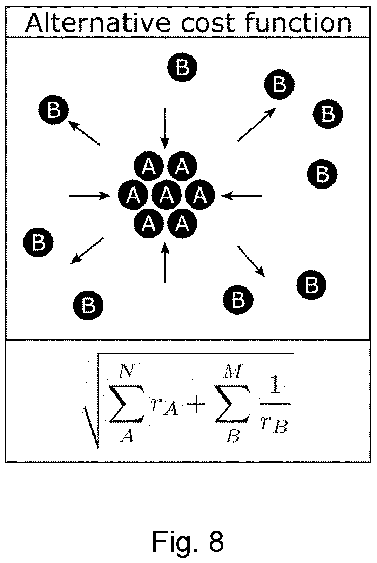

An example of a cost function will be motivated and explained with reference to figure 8. The upper diagram in figure 8 shows a situation with a plurality of particles with two subsets of particles A and B.

The objective for the spatial manipulation in this example shall be that particles A are to be positioned in close proximity to each other in the center and that particles B are to be moved to positions as far away as possible from the agglomeration of particles A.

A suitable cost function $S$ reflecting these requirements is:

$$S = \sqrt{\sum_{A}^{N} r_A + \sum_{B}^{M} \frac{1}{r_B}}$$

where $r_a$ and $r_a$ are the distances of a particle of the type A and the type B, respectively, from the center. $N$ and $M$

are the numbers of particles of the type A and the type B, respectively.

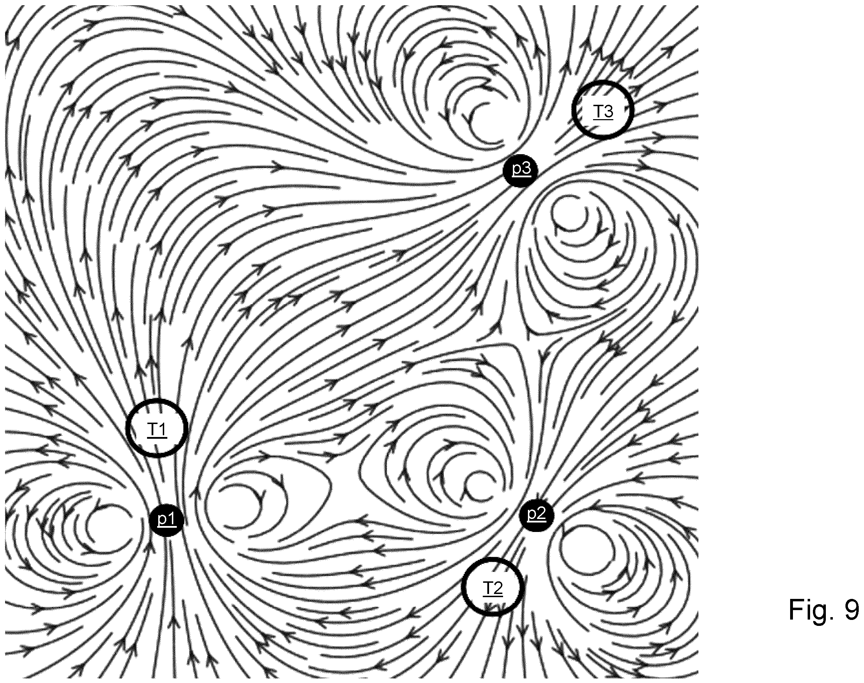

Figure 9 shows a visualization of an exemplary 2-dimensional flow field in a situation where where particles p1, p2, p3 are to be moved to target locations T1, T2, and T3, respectively. The shown 2-dimensional flow field can be considered to be generated by the simultaneous application of a specific dynamic localized heating event to the fluid consisting of three different scan paths or by the subsequent application of three different specific dynamic localized heating events consisting, in each case, of one scan path. The latter description would, strictly speaking, be only adequate, if the three scan paths are applied quickly, i.e., faster than the thermal relaxation in the fluid. As can be seen, the hydrodynamic flow, for each of the particles, is directed such that it carries the respective particle in the direction of its associated target location.

The invention shows that thermoviscous flows can be used to enable the precise positioning of (a) pre-specified object(s) or particle(s) and that positioning can even be automated.

Furthermore, the invention shows that precision hydrodynamic positioning of particles can be achieved all-optically by combining laser-induced flows with a closed feedback loop that considers time-dependent and stochastic particle positions. The inventors have analyzed the physical characteristics of this novel way to control particle position.

While optically facilitated, a precision of up to 24 nm was achieved, that is unprecedented even by classic hydrodynamic trapping. In contrast to optical tweezers, the method according to the invention requires neither specific materials nor the exposure of particles to the laser beam. Feedback-controlled thermoviscous flows are an attractive alternative to classic hydrodynamic trapping techniques, while generating opportunities for a wide range of novel applications.

List of reference numerals and abbreviations

| | |
|---|---|
| 10 | receptacle, sample chamber |
| 12 | fluid, e.g., water |
| 20 | heating device |
| 22 | radiation source, e.g., infrared laser |
| 24 | heating radiation |
| 26 | scanner |
| 28 | beam shutter |
| 30 | means for coupling in of the light beam, e.g., dichroic mirror |
| 40 | microscope, e.g., fluorescence microscope |
| 42 | imaging light source |
| 44 | imaging radiation |
| 46 | filter cube, consisting e.g., of excitation, dichroic, and emission filters |
| 48 | objective |
| 50 | detector for imaging radiation, e.g., camera |
| 52 | Image data |
| 60 | control unit, e.g., PC |
| 100 | apparatus according to the invention |
| A, B, p1- p6 | particles to be manipulated and/or positioned |
| T1-T3 | target locations |
| FLUCS | Focused Light Induced Cytoplasmic Streaming |

References

[1] D. D. Carlo, L. Y. Wu and L. P. Lee, Lab Chip, 2006, 6, 1445-1449.

[2] Q. Luan, C. Macaraniag, J. Zhou and I. Papautsky, Biomicrofluidics, 2020, 14, 031502.

[3] M. Tanyeri, E. M. Johnson-Chavarria and C. M. Schroeder, Appl. Phys. Lett., 2010, 96, 224101.

[4] A. Shenoy, C. V. Rao and C. M. Schroeder, Proc Natl Acad Sci USA, 2016, 113, 3976-3981.

[5] C. M. Lin, Y. S. Lai, H. P. Liu, C. Y. Chen, and A. M. Wo, Anal. Chem., 2008, 80, 8937-8945.

[6] B. R. Lutz, J. Chen, and D. T. Schwartz, Anal. Chem., 2006, 78, 5429-5435.

[7] D. Kumar, A. Shenoy, J. Deutsch and C. M. Schroeder, Current Opinion in Chemical Engineering, 2020, 29, 1-8.

[8] F. M. Weinert, J. A. Kraus, T. Franosch and D. Braun, Phys. Rev. Lett., 2008, 100, 164501.

[9] F. M. Weinert and D. Braun, Journal of Applied Physics, 2008, 104, 104701.

[10] M. Mittasch, P. Gross, M. Nestler, A. W. Fritsch, C. Iserman, M. Kar, M. Munder, A. Voigt, S. Alberti, S. W. Grill and M. Kreysing, Nat Cell Biol, 2018, 20, 344-351.

[11] M. Mittasch, V. M. Tran, M. U. Rios, A. W. Fritsch, S. J. Enos, B. Ferreira Gomes, A. Bond, M. Kreysing and J. B. Woodruff, Journal of Cell Biology, , DOI:10.1083/jcb.201912036.

[12] N. T. Chartier, A. Mukherjee, J. Pfanzelter, S. Furthauer, B. T. Larson, A. W. Fritsch, M. Kreysing, F. Julicher and S. W. Grill, bioRxiv, 2020, 2020.05.30.125864.

**Claims**

1. Method for spatially manipulating at least one particle (p1, p2) in a fluid (12), wherein the particle or the particles (p1, p2) is/are spatially manipulated in the fluid (12) by hydrodynamic flows which are generated in the fluid (12) by means of dynamic localized heating of the fluid (12), **characterized in that**

   at least one target spatial configuration (T1, T2) of the particle(s) (p1, p2) in the fluid (12) is defined and
   that the following further steps are carried out:

   a) an actual spatial configuration of the particle(s) (p1, p2) is captured,
   b) a specific dynamic localized heating event to be applied to the fluid (12) is determined in dependence of at least one recent actual spatial configuration of the particle(s) (p1, p2) and a target configuration (T1, T2) of the particle(s) (p1, p2),
   c) the specific dynamic localized heating as determined in step b) is applied at least once to the fluid (12) and
   d) at least one or all of steps a) to c) are repeated.

2. Method according to claim 1, **characterized in that** the fluid is or contains water.

3. Method according to claim 1 or 2, **characterized in that** the particle(s) to be manipulated (p1, p2) is/are at least one of the following: a biological particle, a cell, a virus, a tissue fragment, a metal particle, a composite material particle, a polymer particle, a nanoparticle.

4. Method according to one of the claims 1 to 3, **characterized in that** the spatial manipulation of the particle(s) (p1, p2) comprises at least one of:

   • moving specified particle(s) (p1, p2) towards specified target locations (T1, T2) in the fluid (12),
   • moving specified particle(s) (p1, p2) along specified paths in the fluid (12),
   • keeping specified particle(s) (p1, p2) in specified target locations (T1, T2) in the fluid (12),
   • keeping specified particle(s) (p1, p2) in specified target orientations (T1, T2) in the fluid (12),
   • moving specified particle(s) (p1, p2) towards specified target orientation(s)(T1, T2) in the fluid (12).

5. Method according to one of the claims 1 to 4, **characterized in that** the dynamic localized heating of the fluid (12) his brought by about a laser or an infrared laser or at least one infrared light emitting diode.

6. Method according to claim 5, **characterized in that** the dynamic localized heating events of the fluid (12) are brought about by repetitive scanning of a focal volume of the laser along a path in the sample.

7. Method according to one of the claims 5 to 6, **characterized in that** the determination of the specific dynamic localized heating events to be applied to the fluid (12) in step b) comprises the determination of at least one of:

   • 2-dimensional scan path in the fluid,
   • 3-dimensional scan path in the fluid,
   • laser intensity,
   • laser scanning speed,
   • scanning frequency of the laser,
   • number of times the scanning path is scanned.

8. Method according to one of the claims 5 to 7, **characterized in that** the paths along which the laser is scanned is chosen such that the heating radiation does not hit the particle(s) (p1, p2) to be manipulated.

9. Method according to one of the claims 5 to 8, **characterized in that** a scan rate of the repetitive scanning is chosen such that temperature fields in the sample can relax between successive scans.

10. Method according to one of the claims 1 to 9, **characterized in that** the specific dynamic localized heating events to be applied to the fluid (12) are determined also in dependence of a mobility of particle(s) in the fluid.

11. Method according to one of the claims 1 to 10, **characterized in that** the imaging device is a microscope.

12. Method according to one of the claims 1 to 11, **characterized in that** the capturing of the actual spatial configuration of the particle(s) (p1, p2) comprises at least one of the following:

    • a 1-dimensional position of the particle(s) (p1, p2),
    • a 2-dimensional position of the particle(s) (p1, p2),
    • a 3-dimensional position of the particle(s) (p1, p2),
• a measurement of an orientation of the particle(s) (p1, p2) within a plane,
• a measurement of a 3-dimensional orientation of the particle(s) (p1, p2) in space.

13. Method according to one of the claims 1 to 12, **characterized in that** the target spatial configuration of the particle(s) (p1, p2) in the fluid (12) comprises at least one of:

• specified target location(s) (T1, T2) of the particle(s) (p1, p2) in the fluid (12),
• specified target velocity or velocities (T1, T2) of the particle(s) (p1, p2) in the fluid (12),
• specified target orientation(s) (T1, T2) of the particle(s) (p1, p2) in the fluid (12),
• specified target rotation speed(s) (T1, T2) of the particle(s) (p1, p2) in the fluid (12).

14. Method according to one of the claims 1 to 13, **characterized in that** the target spatial configuration of the particle(s) (p1, p2) in the fluid (12) is

• a 1-dimensional localisation of the particle(s) (p1, p2),
• a 2-dimensional localisation of the particle(s) (p1, p2) or
• a 3-dimensional localisation of the particle(s) (p1, p2).

15. Method according to one of the claims 1 to 14, **characterized in that** the target configuration includes at least one of the following requirements:

• (a) specified particle(s) be not in a specified location,
• (a) specified particle(s) be as far away from (a) specified location(s) as possible,
• (a) specified particle(s) be at least in (a) specified distance(s) from (a) specified location(s),
• specified particles be as close together as possible,
• specified particles (p1, p2) must not touch each other
• particles of a different kind being treated differently.

16. Method according to one of the claims 1 to 15, **characterized in that** a cost function is calculated (S05, S12) on the basis of a recent actual spatial configuration of the particles (p1, p2) and a target configuration (T1, T2) of the particles (p1, p2).

17. Method according to one of the claims 1 to 16, **characterized in that** at least two particles are simultaneously spatially manipulated.

18. Method according to one claim 17, **characterized in that** the plurality of particles to be spatially manipulated comprises at least one subset of equivalent or identical particles.

19. Method according to claim 17 or 18, **characterized in that** in a configuration with at least two particles to be manipulated, the particle being manipulated, in each case, in the next step is the particle which is farthest away from at least one of a target position and a target orientation associated with the respective particle.

20. Method according to claim 16 and one of the claims 1 to 15 and 17 to 19, **characterized in that** the specific dynamic localized heating event to be determined in step b) is determined in dependence of the cost function.

21. Method according to claim 16 and one of the claims 1 to 15 and 17 to 20, **characterized in that** after an application or each application of the specific dynamic localized heating event in step c), the actual configuration is captured and the cost function is calculated for the new configuration and, if the cost function has decreased from the most recent value, step c) is repeated with the same specific dynamic localized heating event, and, if the cost function has increased from the most recent value, step b) is carried out.

22. Method according to claim 16 and 18 and one of the claims 1 to 15 and 17 to 19, **characterized in that** the cost function is invariant with regard to exchange of equivalent or identical particles.

23. Method according to claim 16 and one of the claims 1 to 15 and 17 to 22, **characterized in that** the cost function contains at least one of the following arguments:

• distance of a specific particle to a specific target location of this particle,
• reciprocal distance of a specific particle to a specified location,
• distance of a specified type of particles to a specific target location of the respective type of particles,
• reciprocal distance of a specified type of particles to a specified location specific for the respective type of particles,

• angle between an actual particle orientation and a target orientation of the respective particle or the respective type of particle,

• difference between an actual particle velocity and a target velocity of the respective particle or the respective type of particle.

24. Method according to one of the claims 1 to 23, **characterized in that**
between steps a) and b) the following further step (S03, S09) is carried out: the particle(s) to be manipulated is or are associated with at least one of a target position and a target orientation.

25. Method according to one of the claims 1 to 24, **characterized in that**
a tracking of the particle(s) (S03, S09) is carried out by identifying particles present in a captured new actual configuration with particles in the most recent actual configuration.

26. Method according to claim 25, **characterized in that**
after the tracking of the particles (S09) a target configuration is reassessed and, if the target configuration is changed to a new target configuration, the particles are then associated, in each case, with at least one of a new target position and a new target orientation.

27. Method according to one of the claims 1 to 26, **characterized in that** the following data are stored in a database:

• previous actual spatial configurations of the particle(s) (p1, p2),
• previous dynamic localized heating events applied to the fluid (12) determined on the basis of at least a respective actual spatial configuration and a target configuration (T1, T2) and
• changes in the actual spatial configurations of the particle(s) (p1, p2) caused by the respective dynamic localized heating event applied to the fluid (12),

and **that** future dynamic localized heating events to be applied to the fluid (12) are calculated using at least parts of the data stored in the database.

28. Method according to one of the claims 1 to 27, **characterized in that** future dynamic localized heating events to be applied to the fluid (12) are calculated using machine learning.

29. Method according to one of the claims 1 to 28,

**characterized in that**
the integrity of at least one particle (p1, p2) is changed prior or during or after the spatial manipulation.

30. Method according to claim 29, **characterized in that**
the change of the integrity comprises at least one of: cutting off, e.g., by laser cutting, of a fragment from a biological particle.

31. Apparatus for spatially manipulating at least one particle (p1, p2) in a fluid (12) by means of hydrodynamic flows,

with a receptacle (10) for receiving the fluid (12) and the particle(s) (p1, p2) to be manipulated, with a heating device (20) for generating hydrodynamic flows within the fluid (12) by dynamic localized heating of the fluid (12), the dynamic localized heating being designed to bring about a spatial manipulation of the particles (p1, p2) within the receptacle (10) by hydrodynamic flows, with an imaging device (40) for imaging at least parts of the receptacle (10), with a control unit (60) for controlling the heating device (20) and the imaging device (40) and for evaluating image data (52) from the imaging device (40), **characterized in that**
the control unit (60) is designed for:

A) activating the imaging device (40) to capture an actual spatial configuration of the particle(s) (p1, p2) within the receptacle (10),
B) determining control signals for the heating device (20) suitable for a specific dynamic localized heating event to be applied to the fluid (12) in dependence of at least one recent spatial configuration of the particle(s) (p1, p2) and a previously defined target configuration (T1, T2) of the particle(s) (p1, p2),
C) activating the heating device (20) to apply the specific dynamic localized heating event as determined in step B) at least once to the fluid (12) and
D) repeating at least one or all of the steps A) to C).

32. Apparatus according to claim 31, which is designed for carrying out the method according to one of the claims 1 to 30.

33. Apparatus according to claim 31 or 32, **characterized in that**
the receptacle (10) has means for controlling the temperature of the fluid (12).

34. Apparatus according to one of the claims 31 to 33, **characterized in that** the heating device has a laser for providing the energy for the dynamic localized heating and optical means including a scanner for relaying heating laser radiation to variable locations the fluid.

35. Apparatus according to one of the claims 31 to 34, **characterized in that** the imaging device (40) is a microscope.

36. Apparatus according to claim 35, **characterized in that** the microscope is designed for carrying out at least one of the following techniques: Fluorescence Microscopy, Multi-Photon-Fluorescence Microscopy, Widefield Microscopy, Scanning Microscopy, Darkfield Microscopy, Confocal Microscopy, Lightsheet Microscopy, Localisation Microscopy, Structured Illumination Microscopy, Photoactivated Localization Microscopy (FPALM), Stochastic Optical Reconstruction Microscopy (STORM), Stimulated Emission Depletion Microscopy (STED), Ground State Depletion Microscopy (GSD), Saturated Pattern Excitation Microscopy, Saturated Structured Illumination Microscopy (SSIM), Light Field Microscopy (LFM), Fourier Light Field Microscopy (FLFM), Oblique Plan Microscopy (OPM).

37. Apparatus according to one of the claims 31 to 36, **characterized in that** at least one device for changing the integrity the particle(s) is present.

38. Apparatus according to claim 37, **characterized in that** the device for changing the integrity of the particle(s) comprises at least one laser.

39. A computer program product comprising instructions which, when the program is executed by the control unit (60), causes the control unit (60) to carry out a method, in particular according to one of the claims 1 to 30, with the steps of

A) activating the imaging device (40) to capture an actual spatial configuration of the particles (p1, p2) within the receptacle (10),
B) determining control signals for the heating device (20) suitable for a specific dynamic localized heating event to be applied to the fluid (12) in dependence of at least one recent spatial configuration of the particle(s) (p1, p2) and a previously defined target(s) configuration (T1, T2) of the particle(s) (p1, p2),

C) activating the heating device (20) to apply the specific dynamic localized heating event as determined in step B) at least once to the fluid (12) and
D) repeating at least one or all of the steps A) to C).

40. A computer-readable storage medium comprising instructions which, when executed by the control unit (60), cause the control unit (60) to carry out a method, in particular according to one of the claims 1 to 30, with the steps of

A) activating the imaging device (40) to capture an actual spatial configuration of the particles (p1, p2) within the receptacle (10),
B) determining control signals for the heating device (20) suitable for a specific dynamic localized heating event to be applied to the fluid (12) in dependence of at least one recent spatial configuration of the particles (p1, p2) and a previously defined target configuration (T1, T2) of the particles (p1, p2),
C) activating the the heating device (20) to apply the specific dynamic localized heating event as determined in step B) at least once to the fluid (12) and
D) repeating at least one or all of the steps A) to C).

Fig. 1

Fig. 2

S01 — initialize targets
S02 — acquire image
S03 — track particles
S04 — associate particles to targets
S05 — compute error

S06 — compute new FLUCS vector
S07 — apply FLUCS vector
S08 — acquire new image
S09 — track particles

S10 — update targets? (animation)

No

S14 — define new targets

Yes

S11 — associate particles to targets
S12 — compute new error

S13 — error decreased?

No          Yes

Fig. 3

Fig. 4

Fig. 5

Fig. 6

EP 4 112 171 A1

Fig. 7

Fig. 8

Fig. 9

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/182770 A1 (TOKONAMI SHIHO [JP] ET AL) 11 June 2020 (2020-06-11)<br>* paragraphs [0042], [0049] – [0052] *<br>* paragraphs [0071] – [0078], [0085] – [0088] *<br>----- | 1-15 | INV.<br>B01L3/00<br>G02B21/32<br>G06V20/69 |
| X | QIAN YANG ET AL: "Microparticle manipulation using laser-induced thermophoresis and thermal convection flow",<br>SCIENTIFIC REPORTS,<br>vol. 10, no. 1,<br>1 December 2020 (2020-12-01), XP55911353,<br>DOI: 10.1038/s41598-020-76209-9<br>Retrieved from the Internet:<br>URL:https://www.nature.com/articles/s41598-020-76209-9.pdf><br>* the whole document *<br>----- | 1-15 | |
| Y | WEINERT FRANZ ET AL: "Optically driven fluid flow along arbitrary microscale patterns using thermoviscous expansion",<br>JOURNAL OF APPLIED PHYSICS, AMERICAN INSTITUTE OF PHYSICS, 2 HUNTINGTON QUADRANGLE, MELVILLE, NY 11747,<br>vol. 104, no. 10,<br>25 November 2008 (2008-11-25), pages 104701-104701, XP012116563,<br>ISSN: 0021-8979, DOI: 10.1063/1.3026526<br>* page 9 *<br>-----<br>-/-- | 1-15 | TECHNICAL FIELDS SEARCHED (IPC)<br><br>B01L<br>G06K<br>G02B<br>G06V |

The present search report has been drawn up for all claims

| Place of search | Date of completion of the search | Examiner |
|---|---|---|
| The Hague | 13 April 2022 | Tiede, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

EP 21 18 2612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YANHUA WU ET AL: "Path planning in automated manipulation of biological cells with optical tweezers", CONTROL AND AUTOMATION, 2009. ICCA 2009. IEEE INTERNATIONAL CONFERENCE ON, IEEE, PISCATAWAY, NJ, USA, 9 December 2009 (2009-12-09), pages 2021-2026, XP031625875, ISBN: 978-1-4244-4706-0 * the whole document * | 1-15 | |
| A | Butaite Ug: "Enhanced optical tweezing: from hydrodynamic micro-manipulation to optimised optical trapping", , 2 September 2020 (2020-09-02), pages 1-170, XP55911352, Retrieved from the Internet: URL:http://theses.gla.ac.uk/81662/1/2020Bu taitePhD.pdf [retrieved on 2022-04-11] * the whole document * | 1-15 | |

TECHNICAL FIELDS
SEARCHED        (IPC)

The present search report has been drawn up for all claims

| Place of search | Date of completion of the search | Examiner |
|---|---|---|
| The Hague | 13 April 2022 | Tiede, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 2612

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2022

| Patent document cited in search report | Publication date | Patent family member(s) | | Publication date |
|---|---|---|---|---|
| US 2020182770 A1 | 11-06-2020 | JP | 6375578 B2 | 22-08-2018 |
| | | JP | 2017202446 A | 16-11-2017 |
| | | US | 2020182770 A1 | 11-06-2020 |
| | | WO | 2017195872 A1 | 16-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008077630 A1

### Non-patent literature cited in the description

- **D. D. CARLO ; L. Y. WU ; L. P. LEE.** *Lab Chip,* 2006, vol. 6, 1445-1449
- **Q. LUAN ; C. MACARANIAG ; J. ZHOU ; I. PAPAUTSKY.** *Biomicrofluidics,* 2020, vol. 14, 031502
- **M. TANYERI ; E. M. JOHNSON-CHAVARRIA ; C. M. SCHROEDER.** *Appl. Phys. Lett.,* 2010, vol. 96, 224101
- **A. SHENOY ; C. V. RAO ; C. M. SCHROEDER.** *Proc Natl Acad Sci USA,* 2016, vol. 113, 3976-3981
- **C. M. LIN ; Y. S. LAI ; H. P. LIU ; C. Y. CHEN ; A. M. WO.** *Anal. Chem.,* 2008, vol. 80, 8937-8945
- **B. R. LUTZ ; J. CHEN ; D. T. SCHWARTZ.** *Anal. Chem.,* 2006, vol. 78, 5429-5435
- **D. KUMAR ; A. SHENOY ; J. DEUTSCH ; C. M. SCHROEDER.** *Current Opinion in Chemical Engineering,* 2020, vol. 29, 1-8
- **F. M. WEINERT ; J. A. KRAUS ; T. FRANOSCH ; D. BRAUN.** *Phys. Rev. Lett.,* 2008, vol. 100, 164501
- **F. M. WEINERT ; D. BRAUN.** *Journal of Applied Physics,* 2008, vol. 104, 104701
- **M. MITTASCH ; P. GROSS ; M. NESTLER ; A. W. FRITSCH ; C. ISERMAN ; M. KAR ; M. MUNDER ; A. VOIGT ; S. ALBERTI ; S. W. GRILL.** *Nat Cell Biol,* 2018, vol. 20, 344-351
- **M. MITTASCH ; V. M. TRAN ; M. U. RIOS ; A. W. FRITSCH ; S. J. ENOS ; B. FERREIRA GOMES ; A. BOND ; M. KREYSING ; J. B. WOODRUFF.** *Journal of Cell Biology*
- **N. T. CHARTIER ; A. MUKHERJEE ; J. PFANZELTER ; S. FURTHAUER ; B. T. LARSON ; A. W. FRITSCH ; M. KREYSING ; F. JULICHER ; S. W. GRILL.** *bioRxiv,* 30 May 2020, 125864